(19) Europäisches Patentamt
European Patent Office
Office européen des brevets

(11) **EP 4 266 402 A1**

(12) **EUROPEAN PATENT APPLICATION**
published in accordance with Art. 153(4) EPC

(43) Date of publication:
**25.10.2023 Bulletin 2023/43**

(51) International Patent Classification (IPC):
$H01M\ 4/131^{(2010.01)}$    $H01M\ 4/134^{(2010.01)}$
$H01M\ 4/136^{(2010.01)}$    $H01M\ 4/38^{(2006.01)}$
$H01G\ 11/06^{(2013.01)}$    $H01G\ 11/30^{(2013.01)}$
$H01G\ 11/60^{(2013.01)}$    $H01G\ 11/86^{(2013.01)}$
$H01M\ 10/052^{(2010.01)}$    $H01M\ 10/0569^{(2010.01)}$
$H01M\ 10/058^{(2010.01)}$

(21) Application number: 22763207.2

(22) Date of filing: 28.02.2022

(52) Cooperative Patent Classification (CPC):
H01G 11/06; H01G 11/30; H01G 11/60;
H01G 11/86; H01M 4/131; H01M 4/134;
H01M 4/136; H01M 4/38; H01M 10/052;
H01M 10/0569; H01M 10/058

(86) International application number:
PCT/JP2022/008345

(87) International publication number:
WO 2022/186151 (09.09.2022 Gazette 2022/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.03.2021 JP 2021031925

(71) Applicant: GS Yuasa International Ltd.
Kisshoin, Minami-ku,
Kyoto-shi, Kyoto 601-8520 (JP)

(72) Inventor: HARADA, Ryo
Kyoto-shi, Kyoto 601-8520 (JP)

(74) Representative: Isarpatent
Patent- und Rechtsanwälte Barth
Charles Hassa Peckmann & Partner mbB
Friedrichstrasse 31
80801 München (DE)

(54) **NON-AQUEOUS ELECTROLYTE POWER STORAGE ELEMENT AND METHOD FOR MANUFACTURING SAME**

(57) A nonaqueous electrolyte energy storage device according to an aspect of the present invention includes: a positive electrode containing a composite of sulfur and a carbon material; a negative electrode containing lithium; and a nonaqueous electrolyte containing a nonaqueous solvent containing a carbonate, in which the content of oxygen extracted in a range of 1,000°C to 1,200°C in the carbon material is 0.11% by mass or more.

Fig. 1

**Description**

TECHNICAL FIELD

The present invention relates to a nonaqueous electrolyte energy storage device and a method for manufacturing the same.

BACKGROUND ART

Nonaqueous electrolyte secondary batteries typified by lithium ion secondary batteries are widely used in electronic equipment such as personal computers and communication terminals, motor vehicles, and the like since these secondary batteries have a high energy density. The nonaqueous electrolyte secondary batteries generally include a pair of electrodes, which are electrically separated from each other by a separator, and a nonaqueous electrolyte interposed between the electrodes, and are configured to allow lithium ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

As nonaqueous electrolyte energy storage devices, nonaqueous electrolyte energy storage devices, such as lithium-sulfur batteries (Li-S batteries), in which sulfur is used as a positive active material are known. Sulfur is a positive active material having a large theoretical capacity, but exhibits low conductivity. For this reason, it has been attempted to form composites of sulfur and carbon materials. Patent Document 1 describes a mesoporous carbon composite material containing mesoporous carbon and sulfur arranged in the mesopores of is mesoporous carbon as a material used in the positive electrode of a secondary battery. Non-Patent Document 1 describes a lithium-sulfur battery containing an electrolyte solution in which LiTFSA (lithium bis(trifluoromethanesulfonyl)amide) is dissolved in G3 (triethylene glycol dimethyl ether).

PRIOR ART DOCUMENT

PATENT DOCUMENT

Patent Document 1: JP-A-2010-95390

NON-PATENT DOCUMENT

Non-Patent Document 1: Yuki Ishino and 7 others, "Effect of Electrolyte Composition on Performance and Stability of Lithium-Sulfur Batteries", Energy Technology, WILEY-VCH, 2019, 1900197, p 1-4

SUMMARY OF THE INVENTION

PROBLEMS TO BE SOLVED BY THE INVENTION

The inventors have found out that nonaqueous electrolyte energy storage devices in which sulfur is used as a positive active material have an advantage that the capacity retention ratio increases as a fluorinated carbonate and the like are used as a nonaqueous solvent of the nonaqueous electrolyte. However, the inventors have further found out that in a case where a nonaqueous electrolyte containing a carbonate is applied to nonaqueous electrolyte energy storage devices in which sulfur is used as a positive active material, there is a problem that the ratio of the initial amount of charge to the initial discharge capacity (hereinafter, the ratio of the amount of charge to the discharge capacity is also referred to as "inverse Coulombic efficiency") becomes remarkably low. In nonaqueous electrolyte energy storage devices in which sulfur is used as a positive active material, usually a negative electrode containing lithium is used, and initial charge-discharge is started from discharge. A low initial inverse Coulombic efficiency means that a large amount of chargeable and dischargeable lithium in the negative electrode is consumed in the initial discharge, and this leads to a decrease in discharge capacity in the second and subsequent charge-discharge. Therefore, in a case where the initial inverse Coulombic efficiency is low, a negative electrode containing excess lithium that is not used in normal charge-discharge (second and subsequent charge-discharge) is prepared during manufacture, and this causes an increase in production cost and the like.

The present invention has been made in view of the above circumstances, and an object thereof is to provide a nonaqueous electrolyte energy storage device including a positive electrode containing a composite of sulfur and a carbon material and a nonaqueous electrolyte containing a carbonate, which has a high initial inverse Coulombic efficiency; and a method for manufacturing such a nonaqueous electrolyte energy storage device.

MEANS FOR SOLVING THE PROBLEMS

A nonaqueous electrolyte energy storage device according to an aspect of the present invention includes: a positive electrode containing a composite of sulfur and a carbon material; a negative electrode containing lithium; and a nonaqueous electrolyte containing a nonaqueous solvent containing a carbonate, in which the content of oxygen extracted in a range of 1,000°C to 1,200°C in the carbon material is 0.11% by mass or more.

A method for manufacturing a nonaqueous electrolyte energy storage device according to another aspect of the present invention includes: oxidizing a carbon material; fabricating a positive electrode containing a composite of the oxidized carbon material and sulfur; preparing a negative electrode containing lithium; and preparing a nonaqueous electrolyte containing a nonaqueous solvent containing a carbonate.

ADVANTAGES OF THE INVENTION

According to an aspect of the present invention, it is possible to provide a nonaqueous electrolyte energy storage device including a positive electrode containing a composite of sulfur and a carbon material and a nonaqueous electrolyte containing a carbonate, which has a high initial inverse Coulombic efficiency, and a method for manufacturing such a nonaqueous electrolyte energy storage device.

BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.

MODE FOR CARRYING OUT THE INVENTION

First, outlines of a nonaqueous electrolyte energy storage device and a method for manufacturing the nonaqueous electrolyte energy storage device disclosed by the present specification will be described.

A nonaqueous electrolyte energy storage device according to an aspect of the present invention includes: a positive electrode containing a composite of sulfur and a carbon material; a negative electrode containing lithium; and a nonaqueous electrolyte containing a nonaqueous solvent containing a carbonate, in which the content of oxygen extracted in a range of 1,000°C to 1,200°C in the carbon material is 0.11% by mass or more.

The nonaqueous electrolyte energy storage device is a nonaqueous electrolyte energy storage device including a positive electrode containing a composite of sulfur and a carbon material and a nonaqueous electrolyte containing a carbonate, and has a high initial inverse Coulombic efficiency. The reason for this is not clear, but the following reasons are presumed. It is generally considered that in a nonaqueous electrolyte energy storage device including a positive electrode containing sulfur, lithium ions released from the negative electrode are irreversibly adsorbed to the carbon material forming the composite in the positive electrode during initial discharge, and the initial inverse Coulombic efficiency decreases. Here, in the nonaqueous electrolyte energy storage device according to an aspect of the present invention, the content of oxygen extracted in a range of 1,000°C to 1,200°C in the carbon material forming the composite in the positive electrode is high, and this is considered to mean that the amount of functional groups containing oxygen in the carbon material is large. In the case of a positive electrode containing such a carbon material, the amount of lithium irreversibly adsorbed during the initial discharge decreases, and it is thus presumed that the nonaqueous electrolyte energy storage device according to an aspect of the present invention has a high initial inverse Coulombic efficiency.

The "content of oxygen extracted in a range of 1,000°C to 1,200°C in the carbon material" is measured by the following method using an oxygen-nitrogen-hydrogen analyzer "EMGA-930" manufactured by HORIBA. The measurement is performed on the carbon material before charge-discharge or on one obtained by subjecting the carbon material incorporated in the positive electrode of the nonaqueous electrolyte energy storage device to treatment by the following procedure. First, the nonaqueous electrolyte energy storage device is subjected to constant current discharge at a current of 0.05 C to the end-of-charge voltage in normal use so as to be in a discharge state. After a rest period of 30 minutes, constant current charge is performed at a current of 0.05 C to the upper limit voltage in normal use. The nonaqueous electrolyte energy storage device is disassembled to take out the positive electrode, and a test battery including a metal lithium electrode as the counter electrode is assembled and subjected to constant current charge at a current value of 10 mA per 1 g of positive composite until the positive electrode potential reaches 3.0 V vs. Li/Li$^+$ to adjust the positive electrode to a full charge state. The battery is disassembled again to take out the positive electrode. The nonaqueous electrolyte attached to the positive electrode taken out is thoroughly washed using dimethyl carbonate. After the washed positive electrode was dried overnight at room temperature, and the composite of sulfur and a carbon material is collected and subjected to heat treatment at 800°C for 5 hours in an inert atmosphere to obtain a carbon material for measurement. The operation from disassembly of the nonaqueous electrolyte energy storage device to collection of the composite of sulfur and a carbon material is performed in an argon atmosphere at a dew point of -60°C or less. Here, the term "normal use" means use of the nonaqueous electrolyte energy storage device under the charge-discharge conditions recommended or specified for the nonaqueous electrolyte energy storage device. The reason for performing the heat treatment at 800°C for 5 hours in an inert atmosphere is to remove sulfur, reaction intermediates of sulfur generated by charge-discharge, and SEI (solid electrolyte interface) from the composite.

[Measurement method]

Oxygen measurement method: Inert gas fusion - non-dispersive infrared absorption (NDIR)
Gas extraction furnace power: Impulse furnace power 0 to 8.0 kW (The suitable power value corresponding to each set temperature is programmed in advance, and the corresponding power value is applied every time the set temperature changes.)
Carrier gas: Helium
Calibration method: 1-point calibration using standard sample

[Measurement procedure]

Under a helium atmosphere, the graphite crucible specified for the analyzer is placed in the extraction furnace and held at 3231°C for 30 seconds, and then baked at 400°C for 20 seconds to remove oxygen contained in the graphite crucible. This graphite crucible is taken out under the air, and about 20 mg of the sample (carbon material) is weighed and put in the graphite crucible, and the graphite crucible is again placed in the extraction furnace under a helium atmosphere. A temperature program, in which the temperature is set to 400°C and maintained for 50 seconds, the set temperature is changed to 600°C and maintained for 50 seconds, the set temperature is changed to 800°C and maintained for 50 seconds, the set temperature is changed to 1,000°C and maintained for 50 seconds, the set temperature is changed to 1,200°C and maintained for 50 seconds, and the set temperature is changed to 2,500°C and maintained for 50 seconds, is executed to stepwise raise the temperature and heat the graphite crucible, and the oxygen extracted from the sample during this time is quantified for each set temperature. Considering that oxygen is adsorbed to the graphite crucible, separately, the amount of oxygen extracted from only the graphite crucible exposed to the air after the baking by executing the temperature program is also measured, and subtracted. Considering the time difference from heating to the set temperature until the generated gas reaches the sensor, the amount of oxygen quantified during the period shown below by the cumulative time with the time when the temperature program starts to be executed is set to 0 seconds is defined as the amount of oxygen extracted at each set temperature.

400°C: 0 seconds to 55 seconds
600°C: 55 seconds to 105 seconds
800°C: 105 seconds to 155 seconds
1,000°C: 155 seconds to 205 seconds
1,200°C: 205 seconds to 255 seconds
2,500°C: 255 seconds to 330 seconds

The "content of oxygen extracted in a range of 1,000°C to 1,200°C in the carbon material" is determined as the proportion of the total amount of oxygen (total amount of oxygen measured during the cumulative time of 155 seconds to 255 seconds) measured at set temperatures of 1,000°C and 1,200°C to the previously measured mass of the sample (carbon material) before heating in the extraction furnace.
The carbonate is preferably a main component of the nonaqueous solvent. In conventional nonaqueous electrolyte energy storage devices, the initial inverse Coulombic efficiency is particularly likely to decrease in a case where a carbonate is a main component of the nonaqueous solvent. Therefore, in the nonaqueous electrolyte energy storage device according to an aspect of the present invention, the effect that the initial inverse Coulombic efficiency is high is remarkably exhibited in a case where a carbonate is a main component of the nonaqueous solvent. In a case where a carbonate is a main component of the nonaqueous solvent, the nonaqueous electrolyte energy storage device in which sulfur is used as a positive active material tends to have a high capacity retention ratio and the like.
The "main component" in the nonaqueous solvent means a component having the highest content on a volume basis.

The carbonate preferably includes a fluorinated carbonate. In such a case, the effect that the initial inverse Coulombic efficiency is high is remarkably exhibited, the oxidation resistance of the nonaqueous electrolyte is high, and so the nonaqueous electrolyte energy storage device in which sulfur is used as a positive active material tends to have a high capacity retention ratio and the like.

A method for manufacturing a nonaqueous electrolyte energy storage device according to another aspect of the present invention includes: oxidizing a carbon material; fabricating a positive electrode containing a composite of the oxidized carbon material and sulfur; preparing a negative electrode containing lithium; and preparing a nonaqueous electrolyte containing a nonaqueous solvent containing a carbonate.

According to the manufacturing method, it is possible to manufacture a nonaqueous electrolyte energy storage device, which includes a positive electrode containing a composite of sulfur and a carbon material and a nonaqueous electrolyte containing a carbonate, and has a high initial inverse Coulombic efficiency.

A nonaqueous electrolyte energy storage device, an energy storage apparatus, and a method for manufacturing a nonaqueous electrolyte energy storage device according to an embodiment of the present invention, and other embodiments will be described in detail. The names of the respective constituent members (respective constituent elements) for use in the respective embodiments may be different from the names of the respective constituent members (respective elements) for use in the background art.

<Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the nonaqueous electrolyte energy storage device.

(Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^7$ Q cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H4160 (2006).

The intermediate layer is a layer arranged between the positive substrate and the positive active material layer. The intermediate layer includes a conductive agent such as carbon particles to decrease contact resistance between the positive substrate and the positive active material layer. The configuration of the intermediate layer is not particularly limited, and includes, for example, a binder and a conductive agent.

The positive active material layer contains a composite of sulfur and a carbon material. The positive active material layer contains optional components such as a conductive agent, a binder (binding agent), a thickener, a filler, or the like if necessary. The positive active material layer is usually formed from a positive composite containing a composite and other optional components.

A composite of sulfur and a carbon material includes a form in which sulfur and a carbon material are contained in one particle. The composite may have a form in which at least part of sulfur is disposed in the pore of a porous carbon material. In other words, the composite may be in the form of a porous carbon material impregnated with at least part of sulfur.

Sulfur in the composite of sulfur and a carbon material functions as a positive active material. Sulfur may be sulfur simple substance or a sulfur compound. Examples of the sulfur compound include metal sulfides such as lithium sulfide and organic sulfur compounds such as organic disulfide compounds and carbon sulfide compounds. Sulfur has advantages such as a high theoretical capacity and low cost.

The sulfur content in the composite (the ratio of the mass of sulfur element to the mass of the composite) is preferably 50% by mass or more and 90% by mass or less, more preferably 60% by mass or more and 80% by mass or less. By setting the sulfur content in the composite to the above range, it is possible to achieve both a large electric capacity and favorable conductivity.

The carbon material in the composite of sulfur and a carbon material is usually porous. In other words, the carbon material is preferably porous carbon. By using porous carbon as the carbon material, the utilization factor of sulfur can be increased.

The BET specific surface area of the carbon material is preferably 300 $m^2/g$ or more and 6,000 $m^2/g$ or less, more preferably 500 $m^2/g$ or more and 4,000 $m^2/g$ or less. By setting the BET specific surface area of the carbon material to the above range, the utilization factor of sulfur can be increased.

The pore volume of the carbon material is preferably 1.0 mL/g or more and 50 mL/g or less, more preferably 1.3 mL/g or more and 5 mL/g or less. By setting the pore volume of the carbon material to the above range, the energy density of the positive electrode can be increased.

The average pore diameter of the carbon material is preferably 1 nm or more and 100 nm or less, more preferably 2 nm or more and 50 nm or less. By setting the average pore diameter of the carbon material to the above range, the ionic conductivity and electron conductivity of the positive electrode can be enhanced in a well-balanced manner.

The BET specific surface area, pore volume and average pore diameter of the carbon material are values measured by the following methods. First, the pore diameter distribution is measured using a nitrogen adsorption method. This measurement can be performed using "autosorb iQ" manufactured by Quantachrome Instruments. Five points are extracted from a region having P/P0 of 0.06 to 0.3 in the acquired adsorption isotherm, BET plotting is performed, and the BET specific surface area is calculated from y-intercept and slope of the straight line. The pore volume is calculated from the total amount of adsorbed gas in the pore diameter distribution measurement by the BJH method. The average pore diameter is calculated using the values of BET specific surface area and pore volume as follows. In other words, assuming that the pores are cylindrical, the pore volume and the pore surface area are expressed by the following equations, respectively.

$$V = \pi \times (d/2)^2 \times H$$

$$A = \pi \times d \times H$$

V: pore volume, A: pore surface area, d: pore diameter, H: pore depth

(equivalent to cylinder height)

From the two equations, the equation d = 4V/A is derived. In calculating the surface area, the area of the surface corresponding to the bottom face of the cylinder is ignored. The pore diameter calculated by substituting the pore volume of the carbon material as V and the BET specific surface area of the carbon material as A into this equation d = 4V/A is defined as the average pore diameter of the carbon material.

The carbon material is a material containing carbon (carbon element) as a main constituent element. The main constituent element means an element having the highest content on a mass basis. The content of carbon (carbon element) in the carbon material is preferably 80% by mass or more and 99.89% by mass or less, more preferably 85% by mass or more and 99.5% by mass or less, still more preferably 90% by mass or more and 99% by mass or less. The carbon material contains oxygen in addition to carbon and may further contain other elements (for example, nitrogen and the like) as constituent elements.

The lower limit of the content of oxygen (oxygen element) extracted in a range of 1,000°C to 1,200°C in the carbon material is 0.11% by mass, preferably 0.15% by mass, more preferably 0.16% by mass, still more preferably 0.17% by mass. As the content of oxygen extracted in a range of 1,000°C to 1,200°C in the carbon material is equal to or more than the lower limit, the initial inverse Coulombic efficiency increases. Meanwhile, the upper limit of the content of oxygen extracted in a range of 1,000°C to 1,200°C in the carbon material is preferably 1% by mass, more preferably 0.5% by mass, still more preferably 0.3% by mass. The content of oxygen extracted in a range of 1,000°C to 1,200°C in the carbon material may be in a range equal to or more than any of the lower limits and equal to or less than any of the upper limits. The content of oxygen extracted in a range of 1,000°C to 1,200°C in the carbon material can be increased by subjecting conventional carbon materials to oxidation treatment as described later, and the content can be adjusted by the conditions for oxidation treatment.

The content of all oxygen (oxygen element) in the carbon material is preferably 1% by mass or more and 20% by mass or less, more preferably 2% by mass or more and 15% by mass or less, still more preferably 3% by mass or more and 10% by mass or less. Examples of oxygen other than the oxygen extracted in a range of 1,000°C to 1,200°C in the carbon material include oxygen contained in the crystal structure of carbon and physically adsorbed oxygen.

The content of the carbon material in the composite (the ratio of the mass of the carbon material to the mass of the composite) is preferably 10% by mass or more and 50% by mass or less, more preferably 20% by mass or more and 40% by mass or less. By setting the content of the carbon material in the composite to the above range, it is possible to achieve both a large electric capacity and favorable conductivity.

The composite may contain components other than sulfur and a carbon material, but is preferably composed essentially of sulfur and a carbon material. The total content of sulfur (sulfur element) and a carbon material in the composite is preferably 90% by mass or more, more preferably 95% by mass or more, and may be 100% by mass.

The content of the composite in the positive active material layer is preferably 60% by mass or more and 95% by mass or less, more preferably 70% by mass or more and 90% by mass or less. By setting the content of the composite to the above range, it is possible to achieve both a large electric capacity and favorable conductivity, and increase the energy density.

The positive active material may contain a positive active material other than sulfur. However, the content of sulfur (sulfur element) in the entire positive active material is preferably 50% by mass or more, more preferably 70% by mass or more, still more preferably 90% by mass or more, yet still more preferably 99% by mass or more, particularly preferably 100% by mass.

The conductive agent is not particularly limited as long as it is a material exhibiting conductivity. This conductive agent does not include the carbon material that constitutes the composite. Examples of such a conductive agent include a carbonaceous material, a metal, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among these materials, carbon black is preferable from the viewpoint of electron conductivity and coatability, and in particular, acetylene black is preferable.

The content of the conductive agent in the positive active material layer is preferably 1% by mass or more and 20% by mass or less, more preferably 3% by mass or more and 15% by mass or less. By setting the content of the conductive agent to the above range, the energy density of the secondary battery can be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. By setting the binder content to the above range, the composite and the like can be stably held.

Examples of the thickener include polysaccharide polymers such as carboxymethylcellulose (CMC) and methylcellulose. In a case where the thickener has a functional group that is reactive with lithium and the like, the functional group may be deactivated by methylation or the like in advance. The content of the thickener in the positive active material layer is preferably 0.5% by mass or more and 10% by mass or less, more preferably 2% by mass or more and 5% by mass or less.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. The content of the filler in the positive active material layer is preferably 0.1% by mass or more and 10% by mass or less. In an embodiment of the present invention, a filler may not be contained in the positive active material layer.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as a component other than the composite, the positive active material other than sulfur, the conductive agent, the binder, the thickener, and the filler.

(Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 $\mu$m or more and 35 $\mu$m or less, more preferably 3 $\mu$m or more and 30 $\mu$m or less, still more preferably 4 $\mu$m or more and 25 $\mu$m or less, particularly preferably 5 $\mu$m or more and 20 $\mu$m or less. By setting the average thickness of the negative substrate to the above range, it is possible to enhance the energy density per volume of a secondary battery while increasing the strength of the negative substrate.

The negative active material layer contains lithium. The negative active material layer contains optional components such as a conductive agent, a binder, a thickener, and a filler, if necessary. The optional components such as a conductive agent, a binder, a thickener, and a filler can be selected from the materials exemplified for the positive electrode.

Lithium contained in the negative active material layer may be metal lithium, or an element constituting a lithium compound (compound containing lithium element). The negative electrode or negative active material layer is only required to contain lithium element. Metal lithium and a lithium compound function as a negative active material. Metal lithium may be pure metal lithium composed essentially of lithium element, or a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain multiple metal elements other than lithium element. Examples of the lithium compound include $Li_4Ti_5O_{12}$ and $LiTiO_2$.

The negative active material layer may be a layer composed essentially of lithium element. The content of lithium element in the negative active material layer is preferably 80% by mass or more, more preferably 90% by mass or more, still more preferably 99% by mass or more.

The negative active material layer may be a metal lithium foil or a lithium alloy foil. The negative active material layer may be a non-porous layer (solid layer). The negative active material layer may be a porous layer including particles containing metal lithium. The average thickness of the negative active material layer is preferably 5 $\mu$m or more and 1,000 $\mu$m or less, more preferably 10 $\mu$m or more and 500 $\mu$m or less, still more preferably 30 $\mu$m or more and 300 $\mu$m or less. The "average thickness" of the negative active material layer refers to the average value of thicknesses measured at arbitrary five points of the negative active material layer.

The negative active material layer may further contain a negative active material other than the negative active material containing lithium. However, the content of the negative active material containing lithium with respect to all the negative active materials contained in the negative active material layer is preferably 90% by mass or more, more preferably 99% by mass or more, still more preferably 100% by mass.

The negative active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Ta, Hf, Nb, or W as a component other than the negative active material containing lithium, the negative active material other than the negative active material containing lithium, the conductive agent, the binder, the thickener, and the filler.

(Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, and means a value measured using a mercury porosimeter.

As the separator, a polymer gel containing a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, the polymer gel may be used concurrently with a porous resin film, a nonwoven fabric, or the like as described above.

(Nonaqueous electrolyte)

The nonaqueous electrolyte contains a nonaqueous solvent containing a carbonate. The nonaqueous electrolyte is usually a nonaqueous electrolyte containing an electrolyte salt dissolved in this nonaqueous solvent.

Examples of the carbonate include cyclic carbonates and chain carbonates. The carbonate may be one in which some or all of the hydrogen atoms are substituted with halogen. The carbonate is preferably a fluorinated carbonate. A fluorinated carbonate refers to a carbonate in which some or all of the hydrogen atoms are substituted with a fluorine atom. By using a fluorinated carbonate, the oxidation resistance of the nonaqueous electrolyte is enhanced, and so the capacity retention ratio of the nonaqueous electrolyte energy storage device in charge-discharge cycles increases and the discharge capacity also increases. One or two or more of the carbonates can be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these, FEC and DFEC, which are fluorinated cyclic carbonates, are preferable and FEC is more preferable.

Examples of the chain carbonate include diethyl carbonate (DEC), dimethyl carbonate (DMC), ethyl methyl carbonate (EMC), diphenyl carbonate, 2,2,2-trifluoroethyl methyl carbonate (TFEMC), and bis(2,2,2 trifluoroethyl) carbonate (BTFEC). Among these, TFEMC and BTFEC, which are fluorinated chain carbonates, are preferable and TFEMC is more preferable.

It is more preferable to use a cyclic carbonate and a chain carbonate concurrently as the nonaqueous solvent. By using the cyclic carbonate, dissociation of the electrolyte salt can be promoted to improve the ionic conductivity of the nonaqueous electrolyte solution. By using the chain carbonate, viscosity of the nonaqueous electrolyte solution can be kept low. In a case where a cyclic carbonate and a chain carbonate are used concurrently, a volume ratio of the cyclic carbonate to the chain carbonate (cyclic carbonate : chain carbonate) is, for example, preferably in a range of 5 : 95 to 80 : 20, more preferably in a range of 30 : 70 to 70 : 30.

A carbonate is preferably a main component of the nonaqueous solvent. The carbonate content in the nonaqueous solvent is preferably 50% by volume or more, more preferably 70% by volume or more, still more preferably 90% by volume or more, yet still more preferably 95% by volume or more, particularly preferably 99% by volume or more. The nonaqueous solvent may be composed only of a carbonate.

The nonaqueous solvent may contain a nonaqueous solvent other than a carbonate. Examples of the other nonaqueous solvent include carboxylic acid esters, phosphoric acid esters, sulfonic acid esters, ethers, amides, and nitriles. Those in which some of the hydrogen atoms contained in these compounds are substituted with halogen may be used.

The content of the fluorinated solvent in the nonaqueous solvent is preferably 50% by volume or more, more preferably 70% by volume or more, still more preferably 90% by volume or more, yet still more preferably 99% by volume or more. The content of the fluorinated solvent in the nonaqueous solvent is particularly preferably 100% by volume. As the nonaqueous solvent is composed essentially of a fluorinated solvent, the oxidation resistance of the nonaqueous electrolyte can be further enhanced. A fluorinated solvent refers to a nonaqueous solvent in which some or all of the hydrogen atoms are substituted with a fluorine atom.

As the electrolyte salt, a lithium salt is used. The lithium salt can be appropriately selected from known lithium salts.

Examples of the lithium salt include inorganic lithium salts such as $LiPF_6$, $LiPO_2F_2$ and $LiClO_4$, and organic lithium salts such as lithium imide salts. One or two or more of the lithium salts can be used.

As the lithium salt, an organic lithium salt is preferable, and a lithium imide salt is more preferable. A lithium imide salt is meant to include not only lithium imide salts having a structure in which two carbonyl groups are bonded to a nitrogen atom, but also those having a structure in which two sulfonyl groups are bonded to a nitrogen atom and those having a structure in which two phosphonyl groups are bonded to a nitrogen atom.

Examples of the lithium imide salt include lithium sulfonylimide salts such as $LiN(SO_2F)_2$ (lithium bis(fluorosulfonyl)imide: LiFSI), $LiN(CF_3SO_2)_2$ (lithium bis(trifluoromethanesulfonyl)imide: LiTFSI), $LiN(SO_2C_2F_5)_2$ (lithium bis(pentafluoroethanesulfonyl)imide: LiBETI), $LiN(SO_2C_4F_9)_2$ (lithium bis(nonafluorobutanesulfonyl)imide), $CF_3$-$SO_2$-N-$SO_2$-N-$SO_2CF_3Li_2$, $FSO_2$-N-$SO_2$-$C_4F_9Li$, $CF_3$-$SO_2$-N-$SO_2$-$CF_2$-$SO_2$-N-$SO_2$-$CF_3Li_2$, $CF_3$-$SO_2$-N-$SO_2$-$CF_2$-$SO_3Li_2$, and $CF_3$-$SO_2$-N-$SO_2$-$CF_2$-$SO_2$-C(-$SO_2CF_3)_2Li_2$; and lithium phosphonylimide salts such as $LiN(POF_2)_2$ (lithium bis(difluorophosphonyl)imide: LiDFPI).

The lithium imide salt preferably has a fluorine atom, and specifically preferably has, for example, a fluorosulfonyl group, a difluorophosphonyl group, a fluoroalkyl group, and the like. Among the lithium imide salts, lithium sulfonylimide salts are preferable, LiTFSI and LiFSI are more preferable, and LiTFSI is still more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. When the content of the electrolyte salt is in the above range, it is possible to increase the ionic conductivity of the nonaqueous electrolyte solution.

The nonaqueous electrolyte solution may contain an additive in addition to the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the mass of the entire nonaqueous electrolyte solution. By setting the content of the additive to the above range, it is possible to improve the capacity retention performance or cycle performance after high-temperature storage, or to further improve the safety.

As the nonaqueous electrolyte, a nonaqueous electrolyte solution and a solid electrolyte may be used concurrently. The solid electrolyte can be selected from arbitrary materials, which exhibit lithium ion conductivity and are solid at normal temperature (for example, from 15°C to 25°C). Examples of the solid electrolyte include sulfide solid electrolytes, oxide solid electrolytes, oxynitride solid electrolytes, and polymer solid electrolytes.

The shape of the nonaqueous electrolyte energy storage device according to the present embodiment is not particularly limited, and examples thereof include cylindrical batteries, prismatic batteries, flat batteries, coin batteries and button batteries.

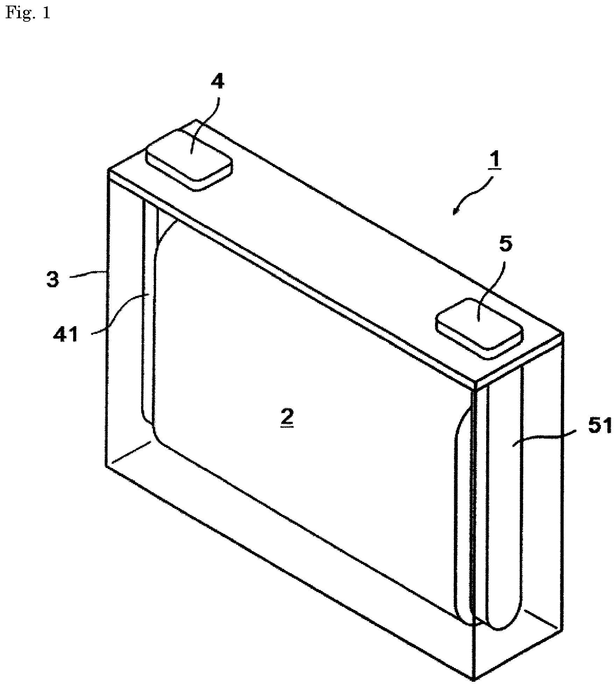

Fig. 1 illustrates a nonaqueous electrolyte energy storage device 1 as an example of prismatic batteries. Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

<Energy storage apparatus>

The nonaqueous electrolyte energy storage device according to the present embodiment can be mounted as an energy storage unit (battery module) configured by assembling a plurality of nonaqueous electrolyte energy storage devices 1 on a power source for motor vehicles such as electric vehicles (EV), hybrid vehicles (HEV), and plug-in hybrid vehicles (PHEV), a power source for electronic equipment such as personal computers and communication terminals, or a power source for power storage, or the like. In this case, the technique of the present invention may be applied to at least one nonaqueous electrolyte energy storage device included in the energy storage unit.

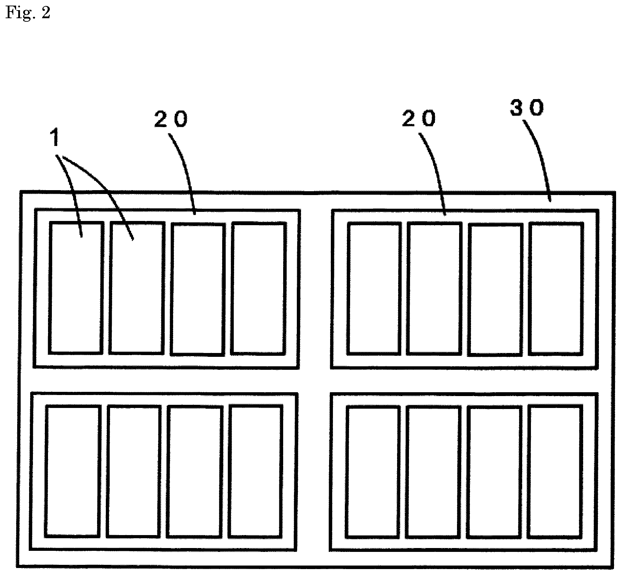

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

<Method for manufacturing nonaqueous electrolyte energy storage device>

A method for manufacturing a nonaqueous electrolyte energy storage device according to an embodiment of the present invention includes: oxidizing a carbon material; fabricating a positive electrode containing a composite of the oxidized carbon material and sulfur; preparing a negative electrode containing lithium; and preparing a nonaqueous electrolyte containing a nonaqueous solvent containing a carbonate.

(Oxidation treatment)

By subjecting the carbon material to oxidation treatment, it is possible to increase the content of oxygen extracted in a range of 1,000°C to 1,200°C in the carbon material. A conventionally known carbon material is used as the carbon material to be subjected to oxidation treatment. The carbon material is preferably a porous carbon material. A commercial product can be used as the carbon material.

Examples of the method for oxidizing the carbon material include heating in an oxygen atmosphere and contact with an oxidizing agent. The oxygen atmosphere may be an air atmosphere. The heating temperature is preferably 100°C or more and 500°C or less, more preferably 150°C or more and 350°C or less. By setting the heating temperature to a temperature equal to or more than the lower limit, it is possible to increase the content of oxygen extracted in a range of 1,000°C to 1,200°C in the carbon material. By setting the heating temperature to a temperature equal to or less than the upper limit, it is possible to suppress changes in the crystal structure and the like of the carbon material due to the oxidation treatment. The heating time is preferably 1 hour or more and 20 hours or less.

Examples of the oxidizing agent include nitric acid, ozone, hydrogen peroxide, halogen, and hypochlorous acid, and nitric acid is preferable. Examples of the method for bringing the carbon material into contact with an oxidizing agent include a method in which the carbon material is exposed to an atmosphere containing an oxidizing agent that is gas; and a method in which the carbon material is immersed in a solution containing an oxidizing agent.

(Fabrication of positive electrode)

A composite of an oxidized carbon material and sulfur can be produced by, for example, the following procedure. The oxidized carbon material and sulfur are mixed together. This mixture is heated in an inert gas atmosphere (for example, in an argon atmosphere) to a temperature equal to or more than the melting point of sulfur (115°C in the case of sulfur simple substance) so that the molten sulfur penetrates into the pores of the carbon material. Thereafter, cooling is performed to a temperature equal to or less than the melting point of sulfur. The heating and cooling may be repeated multiple times.

The fabrication of a positive electrode using the obtained composite can be performed by, for example, applying a positive composite paste to a positive substrate directly or with an intermediate layer interposed therebetween, and performing drying. The positive composite paste contains the obtained composite and the respective components constituting the positive composite such as a conductive agent and a binder, which are optional components. The positive composite paste may further contain a dispersion medium. Specific examples and suitable examples of the positive electrode to be fabricated are the same as those of the positive electrode included in the nonaqueous electrolyte energy storage device according to an embodiment of the present invention described above.

(Preparation of negative electrode)

Preparing a negative electrode containing lithium may be fabricating a negative electrode containing lithium. The negative electrode containing lithium can be fabricated by, for example, layering a metal lithium foil or a lithium alloy foil on a negative substrate directly or with an intermediate layer interposed therebetween. The negative electrode can also be fabricated by, for example, applying a negative composite paste containing a lithium compound to a negative substrate directly or with an intermediate layer interposed therebetween, and performing drying. The negative composite paste contains a lithium compound and the respective components constituting the negative composite such as a conductive agent and a binder, which are optional components. The negative composite paste may further contain a dispersion medium. A commercial product may be used as the negative electrode. Specific examples and suitable examples of the negative electrode to be prepared are the same as those of the negative electrode included in the nonaqueous electrolyte energy storage device according to an embodiment of the present invention described above.

(Preparation of nonaqueous electrolyte)

Preparing a nonaqueous electrolyte containing a nonaqueous solvent containing a carbonate may be producing a nonaqueous electrolyte containing a nonaqueous solvent containing a carbonate. The nonaqueous electrolyte can be produced by, for example, mixing a nonaqueous solvent containing a carbonate with other components such as an electrolyte salt. Specific examples and suitable examples of the nonaqueous electrolyte to be prepared are the same as those of the nonaqueous electrolyte included in the nonaqueous electrolyte energy storage device according to an embodiment of the present invention described above.

The method for manufacturing the nonaqueous electrolyte energy storage device additionally includes, for example, forming an electrode assembly in which the positive electrode and the negative electrode are stacked or wound with a separator interposed therebetween so as to be alternately superposed one on the other; housing the positive electrode and the negative electrode (electrode assembly) in a case; injecting the nonaqueous electrolyte into the case; and performing the initial discharge and charge. In the initial discharge and charge, discharge is performed first.

<Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. A well-known technique can be added to the configuration according to one embodiment.

In the above embodiment, a case where the nonaqueous electrolyte energy storage device is used as a nonaqueous electrolyte secondary battery (lithium-sulfur battery) that is chargeable and dischargeable has been described, but the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

In the embodiment, an electrode assembly in which a positive electrode and a negative electrode are stacked with a separator interposed therebetween has been described, but the electrode assembly may not include a separator. For example, the positive electrode and the negative electrode may be brought into direct contact with each other in a state where a layer not exhibiting conductivity is formed on the active material layer of the positive electrode or negative electrode.

EXAMPLES

Hereinafter, the present invention will be described in more detail with reference to Examples, but the present invention is not limited to the following Examples.

[Example 1]

(Oxidation treatment of carbon material)

The carbon material was oxidized by being heated at 200°C for 1 hour in an air atmosphere. Using a part of the oxidized carbon material, the content of oxygen extracted in a range of 1,000°C to 1,200°C was measured by the method described above and found to be 0.178% by mass. Porous carbon having an average pore diameter of 5 nm, a pore volume of 1.7 mL/g, and a specific surface area of 1,500 m$^2$/g was used as the carbon material in this Example.

(Fabrication of positive electrode)

The oxidized carbon material and sulfur were mixed at a mass ratio of 28 : 72. The mixture was placed in a sealed electric furnace. Argon flowed for 1 hour, then the temperature was increased to 150°C at a rate of temperature increase of 5°C/min, the mixture was held at 150°C for 5 hours and then cooled to 80°C, which was the temperature at which sulfur was solidified, then the temperature was increased again to 300°C at a rate of temperature increase of 5°C/min, and the mixture was held at 300°C for 2 hours to perform heat treatment, whereby a composite (sulfur-porous carbon composite: SPC) was produced.

A positive composite paste containing water as a dispersion medium, the composite obtained above, acetylene black as a conductive agent, CMC as a thickener, and SBR as a binder at a mass ratio of 80 : 10 : 3.6 : 6.4 (in terms of solid components) and containing water as a dispersion medium was applied to an aluminum positive substrate and drying was performed to fabricate a positive electrode.

(Preparation of negative electrode)

A sheet-shaped metal lithium was prepared as a negative electrode.

(Preparation of nonaqueous electrolyte)

Lithium bis(trifluoromethanesulfonyl)imide (LiTFSI) was dissolved at a concentration of 1.0 mol/dm$^3$ in a non-aqueous solvent in which fluoroethylene carbonate (FEC) and 2,2,2-trifluoroethylmethyl carbonate (TFEMC) were mixed at a volume ratio of 50 : 50 to prepare as a nonaqueous electrolyte.

(Assembly of nonaqueous electrolyte energy storage device)

As a separator, a polyethylene microporous membrane was prepared. A nonaqueous electrolyte energy storage device (lithium-sulfur battery) of Example 1 was obtained using the positive electrode, negative electrode, separator, and nonaqueous electrolyte.

[Example 2]

A nonaqueous electrolyte energy storage device of Example 2 was obtained in the same manner as in Example 1, except that the oxidation treatment of the carbon material was changed to heating at 300°C for 1 hour.

[Example 3]

A nonaqueous electrolyte energy storage device of Example 3 was obtained in the same manner as in Example 1, except that the oxidation treatment of the carbon material was changed to contact with nitric acid. Specifically, 40 mL of a nitric acid aqueous solution at 30% by mass and 0.5 g of a carbon material were mixed together and stirred for 10 hours. Thereafter, filtration, washing and drying were performed to obtain an oxidized carbon material.

[Comparative Example 1]

A nonaqueous electrolyte energy storage device of Comparative Example 1 was obtained in the same manner as in Example 1, except that the oxidation treatment of the carbon material was not performed.

Using a part of the oxidized carbon materials of Examples 1 to 3 and a part of the non-oxidized carbon material of Comparative Example 1, the content of oxygen extracted in a range of 1,000°C to 1,200°C was measured by the method described above. The measurement results are presented in Table 1.

[Evaluation]

(Measurement of initial inverse Coulombic efficiency)

On each of the nonaqueous electrolyte energy storage devices thus obtained, constant current discharge at 0.1 C was performed to 1 V at 25°C as the initial discharge. After discharge, constant current charge at 0.2 C was performed to 3 V at 25°C as the initial charge. The ratio of the initial amount of charge to the initial discharge capacity was determined as the initial inverse Coulombic efficiency. The evaluation results are presented in Table 1.

[Table 1]

| | Carbon material | | Initial inverse coulombic efficiency (%) |
| --- | --- | --- | --- |
| | Oxidation treatment | Content of oxygen extracted in range of 1,000°C to 1,200°C (% by mass) | |
| Example 1 | Heating treatment (200° C) | 0.178 | 61 |
| Example 2 | Heating treatment (300° C) | 0.193 | 61 |
| Example 3 | Treatment with nitric acid | 0.165 | 58 |
| Comparative Example 1 | Absence of treatment | 0.102 | 51 |

As presented in Table 1, in each of the nonaqueous electrolyte energy storage devices of Examples 1 to 3, it can be seen that the initial inverse Coulombic efficiency is high as an oxidized carbon material is used in a composite with sulfur.

Non-Patent Document 1 above describes the charge-discharge test results of a lithium-sulfur battery in which G3 (triethylene glycol dimethyl ether), which is an ether, is used as a nonaqueous solvent, and it can be seen that the initial inverse Coulombic efficiency (initial amount of charge to the initial discharge capacity) is close to 100% from the charge-discharge curve in Fig. 3(a) of Non-Patent Document 1. In other words, the problem that the initial inverse Coulombic efficiency is low does not exist in the lithium-sulfur battery as described in Non-Patent Document 1, but is a peculiar problem observed when a carbonate is used in a nonaqueous solvent.

INDUSTRIAL APPLICABILITY

The present invention can be applied to a nonaqueous electrolyte energy storage device used as a power source for electronic equipment such as personal computers and communication terminals, motor vehicles, and the like.

DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

**Claims**

1. A nonaqueous electrolyte energy storage device comprising:

a positive electrode containing a composite of sulfur and a carbon material;
a negative electrode containing lithium; and
a nonaqueous electrolyte containing a nonaqueous solvent containing a carbonate,
wherein a content of oxygen extracted in a range of 1,000°C to 1,200°C in the carbon material is 0.11% by mass or more.

**2.** The nonaqueous electrolyte energy storage device according to claim 1, wherein the carbonate is a main component of the nonaqueous solvent.

**3.** The nonaqueous electrolyte energy storage device according to claim 1 or 2, wherein the carbonate includes a fluorinated carbonate.

**4.** A method for manufacturing a nonaqueous electrolyte energy storage device, the method comprising:

oxidizing a carbon material;
fabricating a positive electrode containing a composite of the oxidized carbon material and sulfur;
preparing a negative electrode containing lithium; and
preparing a nonaqueous electrolyte containing a nonaqueous solvent containing a carbonate.

Fig. 1

Fig. 2

## INTERNATIONAL SEARCH REPORT

| International application No. |
|---|
| **PCT/JP2022/008345** |

### A. CLASSIFICATION OF SUBJECT MATTER

*H01M 4/131*(2010.01)i; *H01M 4/134*(2010.01)i; *H01M 4/136*(2010.01)i; *H01M 4/38*(2006.01)i; *H01G 11/06*(2013.01)i; *H01G 11/30*(2013.01)i; *H01G 11/60*(2013.01)i; *H01G 11/86*(2013.01)i; *H01M 10/052*(2010.01)i; *H01M 10/0569*(2010.01)i; *H01M 10/058*(2010.01)i

FI:  H01M4/38 Z; H01M4/136; H01M4/134; H01M4/131; H01M10/0569; H01M10/058; H01M10/052; H01G11/06; H01G11/30; H01G11/60; H01G11/86

According to International Patent Classification (IPC) or to both national classification and IPC

### B. FIELDS SEARCHED

Minimum documentation searched (classification system followed by classification symbols)

H01M4/131; H01M4/134; H01M4/136; H01M4/38; H01G11/06; H01G11/30; H01G11/60; H01G11/86; H01M10/052; H01M10/0569; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2019-517719 A (LG CHEMICAL LTD) 24 June 2019 (2019-06-24)<br>claims, examples | 1, 2, 4 |
| A | JP 2013-212975 A (TORAY IND INC) 17 October 2013 (2013-10-17)<br>claims, examples | 1-4 |
| A | US 2014/0234702 A1 (THE REGENTS OF THE UNIVERSITY OF CALIFORNIA) 21 August 2014 (2014-08-21)<br>claims | 1-4 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/008345**

| Patent document cited in search report | | | Publication date (day/month/year) | Patent family member(s) | | | Publication date (day/month/year) |
|---|---|---|---|---|---|---|---|
| JP | 2019-517719 | A | 24 June 2019 | US 2020/0235394 A1 claims, examples WO 2018/030616 A1 EP 3457474 A1 KR 10-2018-0017796 A CN 109643792 A | | | |
| JP | 2013-212975 | A | 17 October 2013 | (Family: none) | | | |
| US | 2014/0234702 | A1 | 21 August 2014 | WO 2013/049663 A1 claims CN 104094457 A KR 10-2014-0082994 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010095390 A

**Non-patent literature cited in the description**

- Effect of Electrolyte Composition on Performance and Stability of Lithium-Sulfur Batteries. **YUKI ISHINO.** Energy Technology. WILEY-VCH, 2019, vol. 1900197, 1-4